# EUROPEAN PATENT APPLICATION

(11) **EP 2 249 422 A1**
(43) Date of publication of application: **10.11.2010**
(21) Application number: 09705644.4
(22) Date of filing: 21.01.2009
(51) Int. Cl.: H01M 8/04, H01M 8/06, H01M 8/12, H01M 8/24

(54) **FUEL CELL MODULE AND FUEL CELL DEVICE**

(30) Priority: 29.01.2008 JP 2008017240
(71) Applicant: Kyocera Corporation, Kyoto-shi Kyoto 612-8501 (JP)
(72) Inventor: TAKAHASHI, Naruto, Kirishima-shi Kagoshima 899-4312 (JP)
(74) Representative: Beetz & Partner
(86) International application number: PCT/JP2009/050877
(87) International publication number: WO 2009/096291

(57) **Abstract**

The invention relates to a fuel cell module and a fuel cell apparatus capable of efficient start-up. A fuel cell module (1) includes a housing (2); a cell stack (5) placed inside the housing (2), which includes a plurality of pillar-shaped solid oxide fuel cells (3) formed with an internally-mounted gas flow passage that are arranged in an upright state and are electrically connected with each other; a manifold (4) placed inside the housing (2), configured to secure lower ends of the solid oxide fuel cells (3) and supply a fuel gas to the solid oxide fuel cells (3); a reformer (6) placed inside the housing (2), which is disposed above the solid oxide fuel cells (3), configured to produce a fuel gas which is supplied to the solid oxide fuel cells (3); a vaporizer (9) disposed on an exterior of the housing (2), configured to vaporize a raw fuel and supply it to the reformer (6); and a heat source (10) configured to raise a temperature of the vaporizer (9).

## Description

### Technical field

The present invention relates to a fuel cell module having a constitution that a plurality of fuel cells are accommodated by a housing, and a fuel cell apparatus having the fuel cell module.

### Background Art

In recent years, as next-generation energy, there have been proposed various types of fuel cell modules each constructed such that inside a housing, a cell stack is placed that is composed of a plurality of fuel cells capable of obtaining electric power by utilizing a hydrogen-containing gas and air (oxygen-containing gas), the plurality of fuel cells being juxtaposed and being electrically connected in series with each other.

As such a fuel cell module, for example, there is proposed a fuel cell module constructed such that inside a rectangular parallelepiped-shaped housing containing a power-generating chamber, a cell stack is placed that is composed of a plurality of fuel cells that are juxtaposed so as to be electrically connected in series with each other (refer to Japanese Unexamined Patent Publication JP-A 2007-59377, for example).

In the fuel cell module as described just above, the cell stack is placed inside the housing, and, above the cell stack is disposed a reformer having a vaporizing section for producing water vapor for use in steam reforming and a reforming section for reforming a raw fuel by means of water vapor produced by the vaporizing section.

In this construction, the temperature of the reformer can be raised by exploiting heat evolved by the generation of electric power from the fuel cells, as well as heat evolved by the burning of a fuel gas left unused in the fuel cell at the side of upper ends of the fuel cells. It is therefore possible to perform steam reforming efficiently.

In addition, a fuel cell system employing a liquid fuel such as kerosene and methanol as a raw fuel is proposed (refer to Japanese Unexamined Patent Publication JP-A 2006-351292, for example).

Incidentally, in a case where a liquid fuel such as kerosene and methanol is used as a raw fuel, there is a need to vaporize the liquid fuel before occurrence of a reforming reaction. However, in the fuel cell module as described above, especially at the time of start-up of the fuel cell module, the internal temperature of the housing is still low, which creates the problem of difficulty in vaporizing the liquid fuel at the time of the start-up.

### Disclosure of Invention

Accordingly, the invention is concerned with providing a fuel cell module capable of efficient start-up where a liquid fuel is used as a raw fuel and enhancement in power-generation efficiency.

A fuel cell module according to the invention comprises: a housing; a cell stack placed inside the housing, which comprises a plurality of pillar-shaped solid oxide fuel cells formed with an internally-mounted gas flow passage that are arranged in an upright state and are electrically connected with each other; a manifold placed inside the housing, configured to secure lower ends of the solid oxide fuel cells and supply a fuel gas to the solid oxide fuel cells; a reformer placed inside the housing, which is disposed above the solid oxide fuel cells, configured to produce a fuel gas which is supplied to the solid oxide fuel cells; a vaporizer disposed on an exterior of the housing, configured to vaporize a raw fuel and supply it to the reformer; and a heat source configured to raise a temperature of the vaporizer.

A fuel cell apparatus according to the invention is constructed by placing the fuel cell module set forth hereinabove inside a sheathing case.

### Brief Description of Drawings

Other and further objects, features, and advantages of the invention will be more explicit from the following detailed description taken with reference to the drawings wherein:
Fig. 1 is an external perspective view showing a fuel cell module according to the invention.
Fig. 2 is a sectional view of the fuel cell module shown in Fig. 1.
Fig. 3 is a schematic view showing an example of a fuel cell apparatus according to the invention.
Fig. 4 is a configuration diagram showing an example of the configuration of the fuel cell apparatus according to the invention.
Fig. 5 is a schematic view showing another example of the fuel cell apparatus according to the invention.

### Best Mode for Carrying out the Invention

Now referring to the drawings, preferred embodiments of the invention are described below.

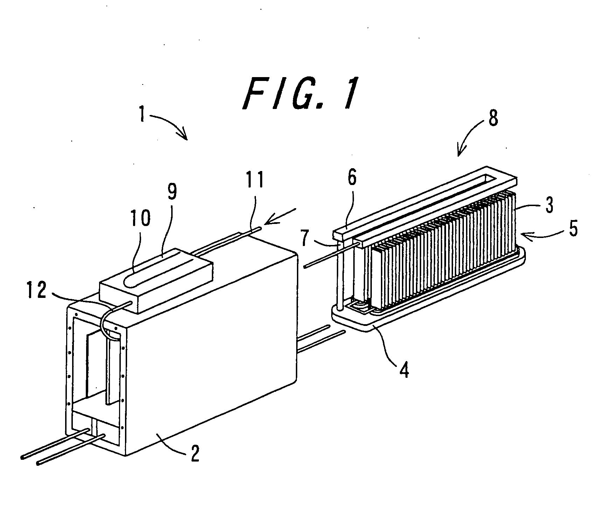

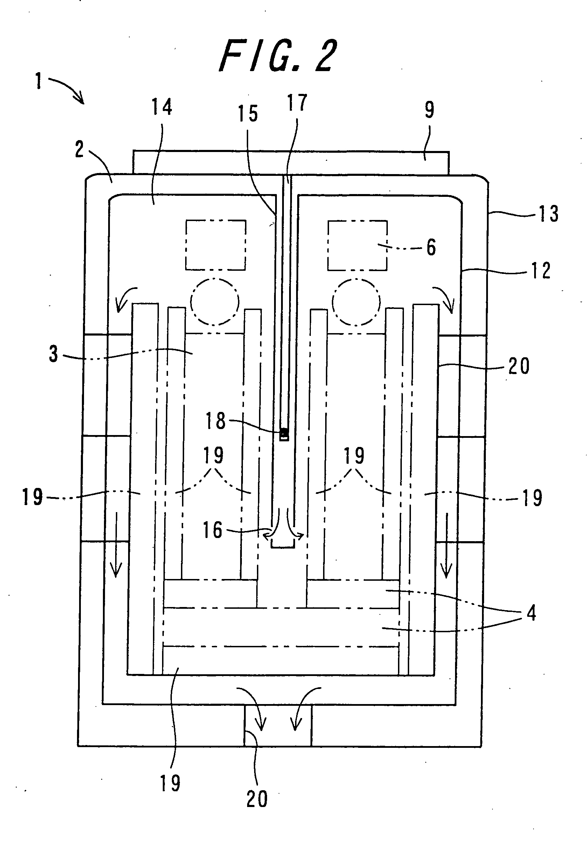

Fig. 1 is an external perspective view showing an example of a fuel cell module 1 (hereafter also referred to simply as "module") according to the invention. Fig. 2 is a sectional view of the module 1 shown in Fig. 1. Note that similar reference numerals are used in the following figures to denote similar members.

The module 1 is constructed by placing a cell stack 5 inside a rectangular parallelepiped-shaped housing 2. In the cell stack 5, pillar-shaped solid oxide fuel cells 3 (hereafter also referred to simply as "fuel cells") having a gas flow passage for allowing internal circulation of gas are arranged in an upright state and electrically connected in series with each other, with a power collecting member (not shown) interposed between the adjacent fuel cells 3, and the lower ends of the fuel cells 3 are fastened to a manifold 4 by an insulating bonding member (not shown) such as a glass seal material. Note that, in Fig. 1, as the fuel cells 3, there are shown solid oxide fuel cell 3 each having the shape of a hollow flat plate, in which a fuel gas flows through an internally-mounted gas flow passage in a longitudinal direction. The solid oxide fuel cell 3 is constructed by disposing a fuel-side electrode, a solid electrolyte, and an oxygen-side electrode successively in the order named on a surface of a support body. Note that, as the solid oxide fuel cell 3, instead of the one such as described just above, for example, a cylindrically shaped fuel cell or a flat plate-shaped fuel cell may be used. Note also that the solid oxide fuel cell 3 may be constructed by disposing an oxygen-side electrode, a solid electrolyte, and a fuel-side electrode successively in the order named on a surface of a support body.

Moreover, in order to obtain a hydrogen-containing gas for use in the fuel cell 3, above the cell stack 5, there is disposed a reformer 6 for producing a fuel gas (hydrogen-containing gas) by reforming a liquid fuel such as kerosene and methanol or a gaseous fuel such as town gas. A fuel gas produced by the reformer 6 is supplied to the manifold 4 through a gas circulation tube 7, and is then supplied to the gas flow passage formed within the fuel cell 3 through the manifold 4. Those constituent components make up a fuel cell stack apparatus 8.

Note that, in Fig. 1, there is shown the state where the housing 2 is placed with its certain part (front and rear surfaces) removed and the internally-accommodated fuel cell stack apparatus 8 is situated just behind the housing 2 after having been withdrawn therefrom. In the module 1 shown in Fig. 1, the fuel cell stack apparatus 8 can be slidingly accommodated in the housing 2.

In a case where a gaseous fuel such as town gas and LPG is used as a raw fuel for a fuel gas which is used for the generation of power in the fuel cell 3, there is no need for the raw fuel to be vaporized because of its being in gaseous form. Therefore, where steam reforming or autothermal reforming is performed by the reformer, a vaporizing section for vaporizing water can be placed inside the housing 2 (so as to be formed integrally with the reformer 6).

In this case, during the time the internal temperature of the module 1 (the internal temperature of the reformer 6) is low, for example, at the time of starting or restarting of the operation of the module 1 (the fuel cell apparatus), partial oxidation reforming is performed in the reformer 6. Then, after the temperature of the reformer 6 was raised, the changing in reforming reaction to autothermal reforming or steam reforming is effected as the need arises. In this way, reforming reactions can be effected efficiently.

However, where a liquid fuel such as kerosene and methanol is used as a raw fuel for a fuel gas used for the generation of power in the fuel cell 3, there is a need to vaporize the liquid fuel at the time of start-up of the module 1. In this regard, where a vaporizing section is provided inside the housing 2 (so as to be formed integrally with the reformer 6), the vaporization of the liquid fuel will be difficult to achieve during the time the internal temperature of the housing 2 (the internal temperature of the reformer 6) is low, for example, at the time of starting or restarting of the operation of the fuel cell apparatus.

Hence, the fuel cell module 1 according to the invention is characterized by having a vaporizer disposed on the exterior of the housing 2 and having a heat source for raising the temperature of the vaporizer. By virtue of this construction, where a liquid fuel is used as a raw fuel, it is possible to set the module 1 in motion with efficiency.

In Fig. 1, there is shown an example in which a vaporizer 9 is disposed on the top surface of the housing 2 and a heater 10 is provided on a surface of the vaporizer 9 as a heat source for raising the temperature of the vaporizer 9. Note that the heater 10 may be provided inside the vaporizer 9.

In this way, at the time of start-up of the module 1, the temperature of the vaporizer 9 can be raised by operating the heater 10. This allows, where a liquid fuel is used as a raw fuel, the liquid fuel to be vaporized readily. Moreover, by supplying the liquid fuel in gaseous form (raw fuel gas) to the reformer 6, a reforming reaction takes place in the reformer 6, with consequent efficient start-up of the module 1. Note that, also in this case, it is preferable that, during the time the internal temperature of the module 1 is low, partial oxidation reforming is performed in the reformer 6, and then, after the temperature of the reformer 6 was raised, the changing to autothermal reforming or steam reforming is effected as the need arises.

Note that, while a heater is named as exemplary of the heat source for raising the temperature of the vaporizer 9, another means can be adopted for use so long as it is capable of raising the temperature of the vaporizer 9 swiftly. The examples of such a heat source include a burner.

Incidentally, where a liquid fuel is used as a raw fuel, it can be considered that the vaporizer 9 is disposed separately and independently of the module 1. In this case, however, there is a need to keep the temperature of the vaporizer 9 at a level where a liquid fuel can be vaporized at all times. This entails constant operation of the heat source for raising the temperature of the vaporizer 9, which leads to the possibility of deterioration in power-generation efficiency.

In this regard, in the fuel cell module 1 according to the invention, since the vaporizer 9 is disposed on the exterior of the housing 2, it follows that, after the initiation of power generation in the module 1, the temperature of the module 1 is raised by radiant heat resulting from the generation of power from the fuel cell 3. This allows the temperature of the vaporizer 9 to be raised (or allows the temperature of the vaporizer 9 to be maintained within a predetermined temperature range), wherefore the length of time the heat source (the heater 10, for example) is used can be reduced.

In this construction, the vaporizer 9 is connected with a raw fuel supply tube 11 for supplying a raw fuel to the vaporizer 9, and is also connected with a raw fuel gas supply tube 12 for supplying a raw fuel gas obtained by vaporization in the vaporizer 9 to the reformer 6.

Note that, where steam reforming (also included therein is autothermal reforming) is effected in the reformer 6, water can be supplied to the vaporizer 9 for water vaporization. Moreover, with the provision of the heat source 10 for raising the temperature of the vaporizer 9, when steam reforming or autothermal reforming is effected in the reformer 6, water can be vaporized efficiently in the vaporizer 9. This helps shorten the time required to be ready for steam reforming or autothermal reforming. Note also that, by designing the raw fuel supply tube 11 in the form of a double tube or by installing extra piping, both a raw fuel and water can be supplied to the vaporizer 9.

Moreover, in order for a raw fuel and water to be vaporized efficiently in the vaporizer 9, it is possible to impart a serpentine channel configuration to the interior of the vaporizer 9. In Fig. 1, there is shown an example in which the raw fuel supply tube 11 and the raw fuel gas supply tube 12 are connected to the vaporizer 9 from two opposite directions for efficient vaporization of a raw fuel within the vaporizer 9 under the condition that the interior of the vaporizer 9 is configured as a serpentine channel. Note that the raw fuel supply tube 11 and the raw fuel gas supply tube 12 may be connected to the vaporizer 9 from the same direction.

Note that, in Fig. 1, there is shown the state where the raw fuel gas supply tube 12 for providing connection between the vaporizer 9 and the reformer 6 is placed with its certain part removed and the fuel cell stack apparatus 8 has been withdrawn from the housing 2.

Moreover, when steam reforming is effected in the reformer 6, water is vaporized in the vaporizer 9 (where a liquid fuel is used as a raw fuel, the liquid fuel is vaporized together). In this regard, if the vaporizer 9 is disposed inside the housing 2, the temperature of the fuel cell 3 located near the vaporizer 9 may be decreased that will eventually suppress a temperature rise in the reformer 6. This leads to the possibility of deterioration in the power-generation efficiency of the fuel cell 3.

By way of contrast, in the module 1 according to the invention, since the vaporizer 9 is disposed on the exterior of the housing 2, it is possible to suppress the lowering of the temperature of the fuel cell 3 and thereby raise the temperature of the reformer 6 efficiently. Therefore, the power-generation efficiency of the fuel cell 3 (the cell stack 5) can be enhanced.

Moreover, a reforming catalyst can be placed inside the vaporizer 9. In this case, when partial oxidation reforming or autothermal reforming is performed within the vaporizer 9, the temperature of the vaporizer 9 can be raised efficiently, and also carbon precipitation out of a raw fuel (liquid fuel) can be suppressed.

Note that, as a reforming catalyst which is placed inside the vaporizer 9, a highly heat-resistant reforming catalyst can be used. As an example, a reforming catalyst made of a noble metal such as Rh, Pd, and Pt carried by a porous carrier such as α-alumina and cordierite can be used. Other than that, a reforming catalyst made of Ru carried by a porous carrier or a reforming catalyst made of Ni carried by a porous carrier can also be used. In this connection, as a reforming catalyst which is placed inside the reformer 6, a reforming catalyst which is excellent in reforming efficiency and durability is desirable for use. It is possible to use, as an example, a reforming catalyst made of a noble metal such as Ru and Pt or a non-precious metal such as Ni and Fe carried by a porous carrier such as γ-alumina, α-alumina, and cordierite.

Fig. 2 is a sectional view of the module 1 shown in Fig. 1. The housing 2 constituting the module 1 takes on a dual structure having an inner wall 12 and an outer wall 13. The outer wall 13 constitutes the outer frame of the housing 2, whereas the inner wall 12 constitutes a power generating chamber 14 for accommodating the cell stack 5 (the fuel cell stack apparatus 8).

Moreover, in the module 1, the area between the inner wall 12 and the outer wall 13 serves as a flow passage for a reaction gas which is admitted into the fuel cell 3. For example, an oxygen-containing gas admitted in the fuel cell 3 flows through this flow passage.

In this construction, the inner wall 12 is provided with a reaction gas admitting member 15 which extends from the upper surface of the inner wall 12 toward a lateral surface of the cell stack 5, is adapted to the width of the cell stack 5 in a cell arrangement direction, and communicates with the flow passage formed by the inner wall 12 and the outer wall 13 for admission of a reaction gas into the cell stack 5. Moreover, at the side of the lower end of the reaction gas admitting member 15 (at the side of the lower end of the fuel cell 3) is disposed an outlet port 16 for admitting a reaction gas into the fuel cell 3.

Note that, in Fig. 2, the reaction gas admitting member 15 constitutes a reaction gas admission flow passage formed by a pair of platy members juxtaposed at a predetermined spacing, the lower ends of which are bonded to a bottom member. Moreover, in Fig. 2, the reaction gas admitting member 15 is so disposed as to lie between two cell stacks 5 (fuel cell stack apparatuses 8) juxtaposed inside the housing 2. Note that, depending upon the number of the cell stacks 5 to be accommodated, for example, the reaction gas admitting member 15 may be so placed as to be held between the lateral surfaces of the cell stacks 5.

Moreover, a fuel gas supplied from the manifold 4 and left unused in the fuel cell 3, now in an unreacted state, can be burned with an oxygen-containing gas supplied from the reaction gas admitting member 15 at the side of the upper ends of the fuel cells 3. In this way, the interior of the module 1 (the housing 2) can be brought into a high-temperature state, with consequent efficient power generation in the fuel cell 3. Note that an ignition device (not shown) for burning an unreacted fuel gas with an oxygen-containing gas is provided inside the housing 2.

Note that, in such a module 1, a space area from the upper ends of the fuel cells 3 to the reformer 5 serves as a burning region for burning an unreacted fuel gas (indicated by alternate long and short dashed lines in Fig. 2), and the temperature at the side of the top surface of the module 1 (the housing 2) becomes particularly high.

Hence, by disposing the vaporizer 9 on part of the exterior of the housing 2 opposed to the burning region, and more specifically, out of the entire exterior of the housing 2, the external top surface thereof in Figs. 1 and 2, it is possible to raise the temperature of the vaporizer 9 efficiently (or to maintain the temperature of the vaporizer 9 within a predetermined temperature range) during the generation of power from the fuel cell 3. In this way, the length of time the heat source (the heater 10 in Fig. 1) for raising the temperature of the vaporizer 9 is used can be reduced, with consequent enhancement in power-generation efficiency.

Hereinafter, other members constituting the module 1 (the housing 2) will be described. Firstly, a temperature sensor 17 is inserted from the top-surface side of the housing 2 so that its temperature measuring portion 18 is located inside the reaction gas admitting member 15. Note that, as the temperature sensor 17, a thermocouple can be used, for example.

The operating temperature of the fuel cell 3 is extremely high. When the fuel cell 3 (the cell stack 5) undergoes an excessive temperature rise, there arises the possibility of a reduction in the amount of power generation, and furthermore the possibility of damage to the fuel cell 3 (the cell stack 5) caused by quality degradation or thermal stress. It is therefore particularly necessary to measure temperatures in the vicinity of the cell stack 5 efficiently, as well as to control the temperatures properly. Hence, the temperature sensor 17 should preferably be so disposed that the temperature measuring portion 18 is able to make temperature measurement on the central area of the cell stack 5 that reaches the highest temperature (that part of the cell stack 5 which is located centrally in the direction of arrangement of the fuel cells 3 and is located in a region from the longitudinal centers to the upper ends of the fuel cells 3).

Moreover, heat insulating materials 19 are provided as appropriate inside the power generating chamber 14 for keeping the internal temperature of the housing 2 at a high level to avoid a reduction in the amount of power generation caused by excessive dissipation of heat within the housing 2 and a consequent drop in the temperature of the fuel cell 3 (the cell stack 5).

In order to keep the temperature of the fuel cell 3 (the cell stack 5) at a high level, it is desirable to juxtapose the heat insulating materials 19 at the side of the lateral surfaces of the cell stack 5 along the direction of arrangement of the fuel cells 3. It is also desirable to juxtapose heat insulating materials 19 having a size equivalent to or greater than the size of the contour of the lateral surface of the cell stack 5. More preferably, the heat insulating materials 19 are arranged in juxtaposition on both lateral sides of the cell stack 5. This helps suppress a decrease in the temperature of the cell stack 5 effectively.

It is preferable that the heat insulating material 19 disposed at the side of the reaction gas admitting member 15 has a notch formed at the lower-end part thereof for supplying a reaction gas to the fuel cells 3.

Moreover, there is additionally provided a gas emission inner wall 20 which is spaced by a predetermined distance away from a bottom surface (internal bottom surface) formed by the inner wall 12 as well as a lateral surface (internal lateral surface) formed thereby along the direction of arrangement of the fuel cells 3. The gas emission inner wall 20 constitutes a gas emission flow passage, and the gas emission flow passage communicates with a vent hole 20 formed on the bottom of the housing 2.

Thereby, a gas emission occurring during the operation of the module 1 (starting process, power generation process, halting process) flows through the gas emission flow passage, and is whereafter discharged from the vent hole 20.

Note that the vent hole 20 may be created either by cutting part of the bottom of the housing 2 or by disposing a tube-like member at the bottom.

The module 1 thus far described is housed in the sheathing case, whereupon the fuel cell apparatus according to the invention is completed.

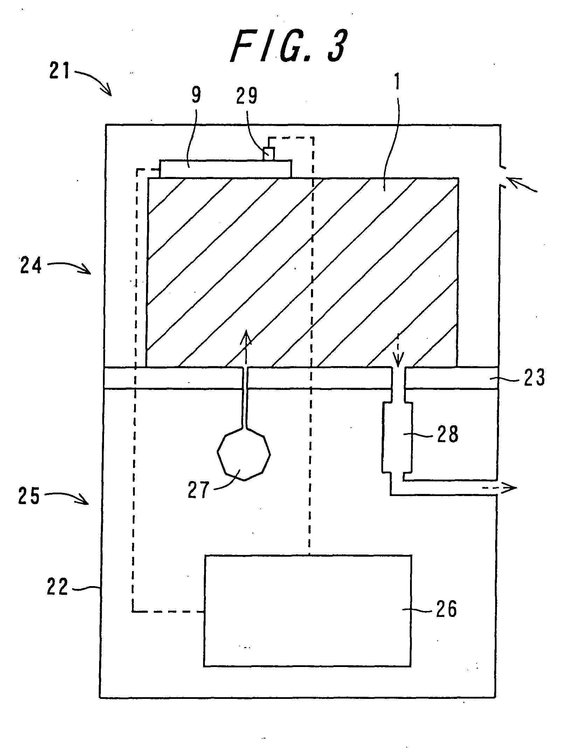

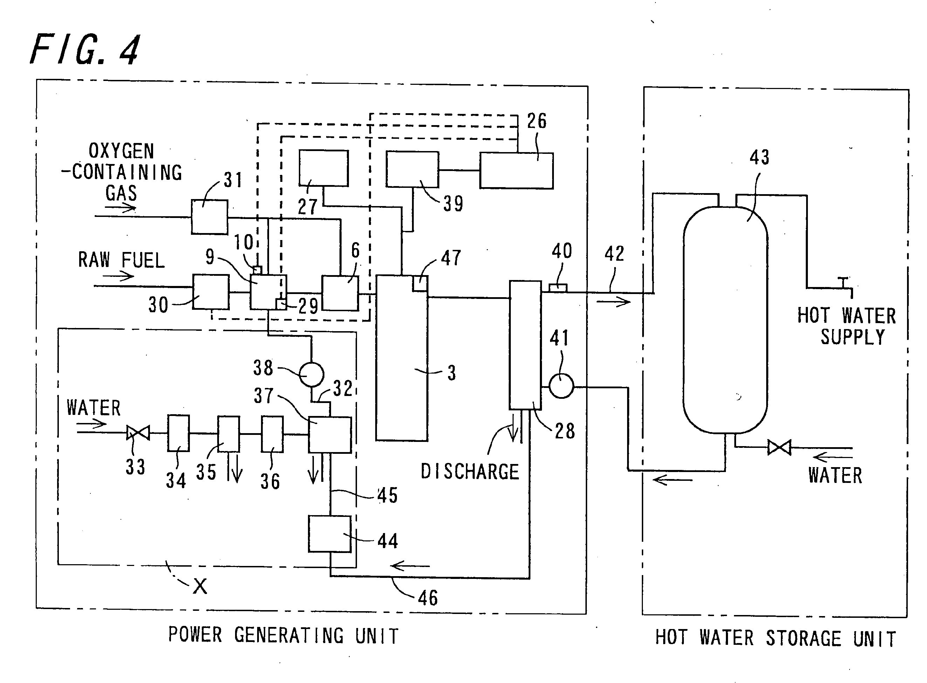

Fig. 3 is a side view schematically showing a fuel cell apparatus 21 according to the invention, wherein certain part of the construction, namely a lateral surface part constituting a sheathing case 22 is removed so that the interior of the sheathing case 22 can be made visible. In addition, Fig. 4 is a configuration diagram showing an example of the configuration of a fuel cell system equipped with the fuel cell apparatus 21 according to the invention.

In the fuel cell apparatus 21 shown in Fig. 3, a partition member 23 is placed inside the sheathing case 22, and a fuel cell module housing chamber 24 (hereafter abbreviated as "module housing chamber") in which is disposed the module 1 is formed above the partition member 23. Moreover, an accessory device housing chamber 25 for accommodating accessory devices required for the operation of the module 1 (in Fig. 3, there are shown a control device 26, a blower 27 for supplying air to the module 1, and a heat exchanger 28 for effecting heat exchange by means of a gas emission from the module 1 and water) is formed under the partition member 23. Note that the partition member 23 may be provided solely for separation between the module housing chamber 24 and the accessory device housing chamber 25. Therefore, the module housing chamber 24 and the accessory device housing chamber 25 may be separated from each other by a gap secured between them.

Moreover, for example, the fuel cell apparatus 1 may be so designed that the sheathing case 22 is divided into a right-hand area and a left-hand area by the partition member 23, one of which serves as the fuel cell module housing chamber 24 for accommodating the module 1 and the other of which serves as the accessory device housing chamber 25 for accommodating accessory devices.

Note that, by designing the fuel cell apparatus so that the sheathing case 22 is divided into an upper area and a lower area by using the partition member 23 as shown in Fig. 3, the fuel cell apparatus 21 can be made compact.

Moreover, in the fuel cell apparatus 21 shown in Fig. 3, a temperature sensor 29 is disposed inside the vaporizer 9 so that the temperature of the vaporizer 9 can be measured in a direct manner, and there is disposed the control device 26 for controlling the operation of the heat source 10 properly on the basis of a temperature from the temperature sensor 29.

In the fuel cell system shown in Fig. 4, the above-described fuel cell apparatus shown in Fig. 3 corresponds to a power generating unit. In conjunction with a hot water storage unit for storing therein hot water following the completion of heat exchange and circulation piping for circulation of water between these units, the power generating unit constitutes the fuel cell system. Note that the hot water storage unit and the circulation piping may be included in constructing the fuel cell apparatus according to the invention.

The fuel cell apparatus (system) shown in Fig. 4 is composed of the fuel cells 3, raw fuel supply means 30 for supplying a raw fuel such as a natural gas and kerosene, and oxygen-containing gas supply means 31 for supplying an oxygen-containing gas to the vaporizer 9 and the reformer 6. Note that the vaporizer 9 is provided with the heater (heat source) 10 and the temperature sensor 29 described above. Moreover, the module 1 according to the invention is constructed by placing the fuel cells 3 and the reformer 6 inside the housing 2.

Moreover, in the fuel cell apparatus (power generating unit) shown in Fig. 4, there are provided the heat exchanger 28, a condensate water processing device 44 for processing condensate water produced by heat exchange, and a condensate water supply pipe 45 for supplying condensate water produced in the heat exchanger 28 to the condensate water processing device 44. The condensate water processed by the condensate water processing device 44 is stored in a water tank 37, and is whereafter supplied to the vaporizer 9 through a water pump 38. Note that condensate water processing means for condensate water processing (for example, ion exchange resin or the like, not shown) may be provided not only in the condensate water processing device 44 but also in the condensate water supply pipe 45 and so forth.

Meanwhile, where the condensate water supplied to the condensate water processing device 44 is small in amount, or where the condensate water processed by the condensate water processing means is low in purity, externally-supplied water (tap water, for example) can be supplied to the vaporizer 9 after being processed into pure water. The construction shown in Fig. 4 is provided with various water processing devices as means for processing externally-supplied water into pure water.

As various water processing devices for supplying externally-supplied water to the vaporizer 9, out of an activated carbon filter device 34 for the clarification of water, a reverse osmosis membrane device 35, and an ion exchange resin device 36 for turning clarified water into pure water, at least the ion exchange resin device 36 is provided (preferably, all of the above devices are provided). Pure water produced in the ion exchange resin device 36 is stored in the water tank 37. Note that, in the fuel cell apparatus (power generating unit) shown in Fig. 4, as water processing devices, all of the aforementioned devices are provided, and also a feed-water valve 33 is provided for adjusting the amount of externally-supplied water. Moreover, the condensate water processing device 44 and the water tank 37 are coupled to each other by a tank coupling tube 45. Note that, where only condensate water is supplied to the vaporizer 9, the condensate water processing device 44 and the vaporizer 9 can be connected to each other via the water pump 38.

Moreover, various water processing devices for supplying water to the vaporizer 9 and the condensate water processing device are collectively represented as a water supply device X which is enclosed by alternate long and short dashed lines in Fig. 4 (note that a feed-water tube 32 for establishing connection between the vaporizer 9 and the water tank 37, the tank coupling tube 45, and a condensate water supply tube 46 are also included in the water supply device X).

The fuel cell apparatus shown in Fig. 4 is further provided with a blower 27 for supplying an oxygen-containing gas to the fuel cell 3, a power conditioner 39 for converting direct-current power generated by the fuel cell 3 into alternating-current power and supplying it to an external load, an outlet water temperature sensor 40 disposed at the outlet of the heat exchanger 28, for measuring the water temperature of water flowing through the outlet of the heat exchanger 28 (a stream of circulating water), and the control device 26. In conjunction with a circulation pump 41, those components constitute the power generating unit. The control device 16 will be described in detail later. Such devices constituting the power generating unit are placed inside the sheathing case 22, whereupon there is obtained the fuel cell apparatus offering easiness in emplacement, carryability, and so forth (not shown). Note that the hot water storage unit is designed to have a hot water storage tank 43 for storing therein hot water following the completion of heat exchange.

In addition, an ignition device 47 for burning an unreacted fuel gas left unused in the fuel cell 3 with an oxygen-containing gas is provided inside the module (indicated as the fuel cell 1 in Fig. 4). Note that, as the ignition device 47, a heretofore known ignition device, for example, a heater, a burner, or the like can be used.

Note that the arrows depicted in the diagram indicate the directions of flows of a gas to be reformed, an oxygen-containing gas, and water, and the broken lines indicate the paths of main signals which are transmitted to the control device 26 or the paths of main signals which are transmitted from the control device 26.

Hereinafter, the starting operation of the fuel cell apparatus according to the invention will be described with reference to Fig. 4. At the time of start-up of the fuel cell apparatus, the control device 26 effects control so as to activate the heat source 10 when the temperature of the vaporizer 9 measured by the temperature sensor 29 is lower than or equal to a first temperature. The first temperature should preferably be a temperature set at a level where water and a liquid fuel can be sufficiently vaporized in the vaporizer 9. For example, the first temperature can be set at 200°C.

Upon the temperature of the vaporizer 9 reaching a predetermined temperature (for example, 200 to 400°C), then the control device 26 effects control so as to activate the water supply means X (the water pump 38, etc.) and the raw fuel supply means 30. At this time, where partial oxidation reforming or autothermal reforming is performed in the vaporizer 9, the control device 26 effects control so as to activate the oxygen-containing gas supply means 31, too.

Subsequently the control device 26 effects control so as to activate the blower 27 and turn on the ignition device 47 within the housing 2. By doing so, a raw fuel gas obtained by vaporization in the vaporizer 9 is supplied to the fuel cell 3 through the reformer 6, and is then burned with a fuel gas discharged from the upper-end part of the fuel cell 3 and an oxygen-containing gas supplied by the blower 27, with consequent increase in the temperatures of the reformer 6 and the fuel cell 3.

By virtue of the control operation of the control device 26 thus far described, even if the internal temperature of the housing 2 is low, the temperature of the vaporizer 9 can be raised efficiently, and, where a liquid fuel is used as a raw fuel, the liquid fuel can be readily vaporized. In this way, since a vaporized raw fuel, namely a raw fuel gas is supplied to the reformer 6, it is possible to achieve a prompt temperature rise without causing hindrance to a rise in the temperature of the reformer 6. This makes it possible to set the fuel cell apparatus in motion efficiently, as well as to enhance the power-generation efficiency of the fuel cell 3 (the cell stack 5).

Note that, after the initiation of power generation in the fuel cell 3, the temperature of the vaporizer 9 is raised by radiant heat resulting from the generation of power from the fuel cell 3. In this regard, where a reforming catalyst as described above is disposed inside the vaporizer 9, an excessive temperature rise in the vaporizer 9 will result in the possibility of accelerating quality degradation in the reforming catalyst.

It is therefore preferable that the control device 26 effects control so as to deactivate the heater (heat source) 10 when the temperature of the vaporizer 9 measured by the temperature sensor 29 is higher than a second temperature which is set to be higher than the first temperature. The second temperature may be a temperature at which there arises no adverse effect of accelerating quality degradation in the reforming catalyst provided inside the vaporizer 9. For example, the second temperature can be set at 600°C. Such temperatures can be determined arbitrarily in accordance with the size of the vaporizer 9, the kind of a raw fuel which is supplied to the vaporizer 9, the kind of a reforming catalyst which is disposed inside the vaporizer 9, and so forth.

In this way, the length of time the heater (heat source) 10 is used can be reduced. This allows a fuel cell apparatus offering enhanced power-generation efficiency to be attained. Moreover, where a reforming catalyst is disposed inside the vaporizer 9, it is possible to suppress quality degradation of the reforming catalyst. <

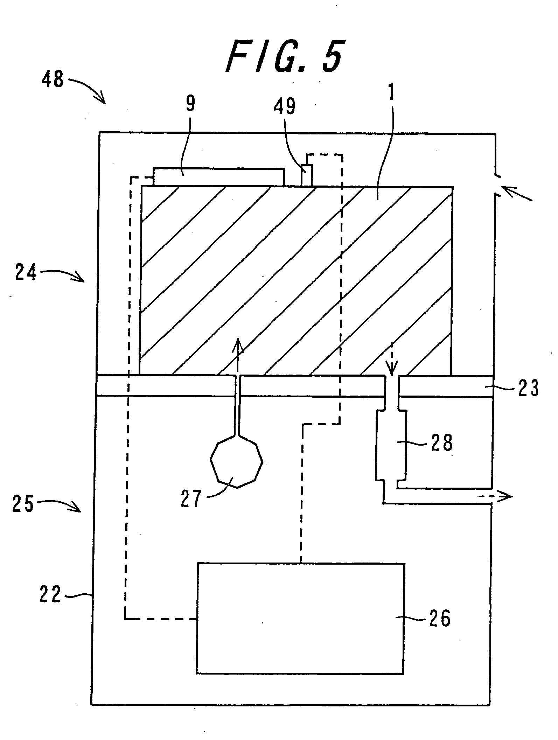

Fig. 5 shows another example of the fuel cell apparatus according to the invention, and more specifically it is a side view schematically showing a fuel cell apparatus 48 in a state where part of the construction, namely a lateral surface part constituting the sheathing case 22 is removed so that the interior of the sheathing case 22 can be made visible.

In the fuel cell apparatus 21 shown in Figs. 3 and 4, the control device 26 controls the workings of the fuel cell apparatus 21 by utilizing the temperature sensor 29 for measuring the temperature of the vaporizer 9. On the other hand, in the fuel cell apparatus 48 shown in Fig. 5, as exemplified, the control device 26 controls the workings of the fuel cell apparatus 48 on the basis of a temperature detected by a temperature sensor 49 disposed inside the housing 2. By disposing the temperature sensor 49 inside the housing 2, the internal temperature of the housing 2 can be measured, wherefore the temperature of the vaporizer 9 can be measured in an indirect manner. When the internal temperature of the housing 2 becomes high, the temperature of the vaporizer 9 can be raised correspondingly without the necessity of using the heater (heat source) 10 for raising the temperature of the vaporizer 9.

Note that, in the placement of the temperature sensor 49 inside the housing 2, the temperature sensor 49 should preferably be disposed at a location permitting an indirect measurement of the temperature of the vaporizer 9. In view of this the temperature sensor 49 can be positioned arbitrarily in accordance with the structure of the module 1. The examples of placement positions include the power generating chamber 14 and the inlet or outlet of the reformer 6. Note that "the indirect measurement of the temperature of the vaporizer 9" means, for example, that the temperature of the vaporizer 9 is measured on the basis of a temperature provided from the temperature sensor 49 on the precondition that a correlation in temperature between the vaporizer 9 and the position of placement of the temperature sensor 49 is examined in advance.

Where the temperature sensor 49 is disposed at the inlet of the reformer 6, in order for a reforming reaction to take place properly in the reformer 6, for example, the first temperature can be set at 150°C, and the second temperature, which is determined to be higher than the first temperature, can be set at 400°C.

At the time of start-up of the fuel cell apparatus 48, the control device 26 effects control so as to activate the heater (heat source) 10 when the temperature of the inlet of the reformer 6 measured by the temperature sensor 49 is lower than or equal to 150°C. Then, upon the temperature of the inlet of the reformer 6 reaching a predetermined temperature (for example, 150 to 400°C), the control device 26 effects control so as to activate the water supply means X (the water pump 38, etc.) and the raw fuel supply means 30, and subsequently effects control so as to activate the blower 27 and turn on the ignition device 47. By doing so, it is possible to set the fuel cell apparatus 48 in motion efficiently.

Meanwhile, when the temperature of the inlet of the reformer 6 is higher than 400°C, it is preferable that the control device 26 effects control so as to deactivate the heater (heat source) 10. This helps suppress (prevent) the liquefaction of a liquid fuel, water, and so forth vaporized by the vaporizer 9.

Moreover, where the temperature sensor 49 is disposed at the outlet of the reformer 6, in consideration of power-generation efficiency in the fuel cell 3 and quality degradation of the fuel cell 3, the first temperature can be set at 550°C, and the second temperature can be set at 700°C. By exercising the above-described control operation in accordance with these preset temperatures, it is possible to set the fuel cell apparatus in motion efficiently.

In this way, even if the temperature sensor 49 is disposed inside the housing 2, the temperature of the vaporizer 9 can be measured in an indirect manner and, on the basis of the measured temperature, the heater (heat source) 10 can be controlled efficiently. This makes it possible to set the fuel cell apparatus in motion efficiently.

Note that the preset temperatures can be changed arbitrarily in accordance with the configuration of the fuel cell 3, the sizes of, respectively, the cell stack 5, the reformer 6, and the vaporizer 9, and so forth.

Moreover, although the above description deals mainly with the case where a liquid fuel such as kerosene is used as a raw fuel, even if a gaseous fuel such as town gas and LPG is used as a raw fuel, by disposing the vaporizer 9 on the exterior of the housing 2, it is possible to suppress a decrease in the temperature of the fuel cell 3 caused by water vaporization, as well as to achieve efficient temperature increase in the reformer 6.

While the invention has been described herein in detail, the invention is not limited to the embodiments and examples as described hereinabove, and therefore various changes and modifications may be made without departing from the spirit and scope of the claimed invention.

Moreover, depending on the configuration and placement of the fuel cell 3, the vaporizer 9 can be disposed on an exterior of the housing 2 such as a lateral surface. Where the vaporizer 9 is dispose on a lateral surface of the housing 2, it is preferable that the vaporizer 9 is disposed, out of the entire lateral surface of the housing 2, at a location opposed to the burning region. This makes it possible to increase the temperature of the vaporizer 9 (or to maintain the temperature of the vaporizer 9 within a predetermined temperature range) efficiently.

Further, in the fuel cell apparatus in which a reforming catalyst is disposed inside the vaporizer 9 and a liquid fuel, or kerosene is used as a raw fuel, where water and kerosene are mixed together within the vaporizer 9, it is preferable that the control device 26 effects control of the water supply means X (the water pump 38, etc.) in a manner so as to supply water to the vaporizer 9 first, and, following the completion of water vaporization in the vaporizer 9, effects control of the raw fuel supply means 30 in a manner so as to supply kerosene to the vaporizer 9. This makes it possible to suppress carbon precipitation resulting from kerosene decomposition and thereby suppress quality degradation of the fuel cell 3.

As described heretofore, according to the present embodiment, in such a fuel cell module 1, the vaporizer 9 is disposed on the exterior of the housing 2 and the heat source 10 is provided for raising the temperature of the vaporizer 9. Therefore, at the start-up of the fuel cell module 1, the temperature of the vaporizer 9 can be raised regardless of the internal temperature of the housing 2. This allows, at the start-up of the fuel cell module 1, a liquid fuel used as a raw fuel to be vaporized efficiently. Moreover, at the start-up of the fuel cell module 1, even if the internal temperature of the housing 2 is low, a liquid fuel can be readily vaporized. Since a vaporized liquid fuel is supplied to the reformer 6, it is possible to raise the temperature of the reformer 6 quickly and thereby set the fuel cell module 1 in motion efficiently.

Moreover, since the vaporizer 9 is disposed on the exterior of the housing 2, after the initiation of power generation in the solid oxide fuel cell 3, the temperature of the vaporizer 9 can be raised by radiant heat resulting from the generation of power from the solid oxide fuel cell 3. This makes it possible to reduce the length of time the heat source 10 is used and thereby enhance the power-generation efficiency.

Moreover, in such a fuel cell module 1, since a reforming catalyst is disposed inside the vaporizer 9, it is possible to perform partial oxidation reforming as well as autothermal reforming within the vaporizer 9. In this way, the temperature of the vaporizer 9 can be raised efficiently, and also occurrence of carbon precipitation can be suppressed.

Moreover, in such a fuel cell module 1, the vaporizer 9 is disposed on that part of the exterior of the housing 2 which is opposed to the burning region located at the side of the upper ends of the solid oxide fuel cells 3. In this construction, in order to raise the temperature of the vaporizer 9, combustion heat evolved by the burning of an unreacted fuel gas can be utilized efficiently, and thus the temperature of the vaporizer 9 can be raised quickly. This makes it possible to set the fuel cell module 1 in motion efficiently, as well as to reduce the length of time the heat source 10 is used.

Moreover, such a fuel cell apparatus is constructed by placing the above-described fuel cell module 1 inside the sheathing case 22. Accordingly, where a liquid fuel is used as a raw fuel, the fuel cell apparatus can be set in motion efficiently.

Moreover, in such a fuel cell apparatus, the activation and deactivation of the heat source 10 are controlled on the basis of the temperature of the vaporizer 9, with consequent efficient operation of the heat source. This allows a fuel cell apparatus offering enhanced power-generation efficiency to be attained.

Moreover, in such a fuel cell apparatus, the activation and deactivation of the heat source 10 are controlled on the basis of the internal temperature of the housing 2, with consequent efficient operation of the heat source. This allows a fuel cell apparatus offering enhanced power-generation efficiency to be attained.

The fuel cell module according to the invention comprises: a housing; a cell stack placed inside the housing, which is composed of a plurality of pillar-shaped solid oxide fuel cells formed with an internally-mounted gas flow passage that are arranged in an upright state and are electrically connected with each other; a manifold placed inside the housing, for securing lower ends of the solid oxide fuel cells and supplying a fuel gas to the solid oxide fuel cells; a reformer placed inside the housing, which is disposed above the solid oxide fuel cells, for producing a fuel gas which is supplied to the solid oxide fuel cells; a vaporizer disposed on an exterior of the housing, for vaporizing a raw fuel and supplying it to the reformer; and a heat source for raising the temperature of the vaporizer. With this construction, the fuel cell module can be set in motion efficiently, wherefore the power-generation efficiency of the solid oxide fuel cells (cell stack) can be enhanced. In addition to that, by placing the fuel cell module according to the invention inside a sheathing case, it is possible to attain a fuel cell apparatus that can be set in motion efficiently.

The invention may be embodied in other specific forms without departing from the spirit or essential characteristics thereof. The present embodiments are therefore to be considered in all respects as illustrative and not restrictive, the scope of the invention being indicated by the appended claims rather than by the foregoing description and all changes which come within the meaning and the range of equivalency of the claims are therefore intended to be embraced therein.

## Claims

1. A fuel cell module comprising:
a housing;
a cell stack placed inside the housing, which comprises a plurality of pillar-shaped solid oxide fuel cells formed with an internally-mounted gas flow passage that are arranged in an upright state and are electrically connected with each other;
a manifold placed inside the housing, configured to secure lower ends of the solid oxide fuel cells and supply a fuel gas to the solid oxide fuel cells;
a reformer placed inside the housing, which is disposed above the solid oxide fuel cells, configured to produce a fuel gas which is supplied to the solid oxide fuel cells;
a vaporizer disposed on an exterior of the housing, configured to vaporize a raw fuel and supply it to the reformer; and
a heat source configured to raise a temperature of the vaporizer.

2. The fuel cell module according to claim 1, wherein a reforming catalyst is provided inside the vaporizer.

3. The fuel cell module according to claim 1 or 2, wherein a burning region is provided for burning an unreacted fuel gas in the solid oxide fuel cells at the side of upper ends of the solid oxide fuel cells,
and wherein the vaporizer is disposed on that part of the exterior of the housing which is opposed to the burning region.

4. A fuel cell apparatus constructed by placing the fuel cell module as set forth in any one of claims 1 to 3 inside a sheathing case.

5. The fuel cell apparatus according to claim 4, wherein a temperature sensor is disposed inside the vaporizer,
and wherein, in the sheathing case is provided a control device which is configured to control so as to activate the heat source when a temperature measured by the temperature sensor is lower than or equal to a first temperature, and is configured to control so as to deactivate the heat source when a temperature measured by the temperature sensor is higher than a second temperature which is set to be higher than the first temperature.

6. The fuel cell apparatus according to claim 4, wherein a temperature sensor is disposed inside the housing,
and wherein, in the sheathing case is provided a control device which is configured to control so as to activate the heat source when a temperature measured by the temperature sensor is lower than or equal to a first temperature, and is configured to control so as to deactivate the heat source when a temperature measured by the temperature sensor is higher than a second temperature which is set to be higher than the first temperature.
